# EUROPÄISCHE PATENTSCHRIFT

(11) **EP 3 171 498 B1**
(45) Veröffentlichungstag und Bekanntmachung des Hinweises auf die Patenterteilung: **14.03.2018**
(21) Anmeldenummer: 16195930.9
(22) Anmeldetag: 27.10.2016
(51) Int. Cl.: H02K 23/30, H02K 23/58, H02K 13/10, H02K 3/12, H02K 3/28, H02K 13/00, H02K 13/04

(54) **ZWEIPOLIGER BÜRSTENKOMMUTIERTER DC-ELEKTROMOTOR**
TWO-POLE BRUSH-COMMUTED DC ELECTRIC MOTOR
ÉLECTROMOTEUR CC À COMMUTATION À BALAIS BIPOLAIRES

(30) Priorität: 19.11.2015 EP 15003305
(43) Veröffentlichungstag der Anmeldung: 24.05.2017
(73) Patentinhaber: Lakeview Innovation Ltd., 6374 Buochs (CH)
(72) Erfinder: Schulze, Jens, 6074 Giswil (CH)
(74) Vertreter: Grünecker Patent- und Rechtsanwälte PartG mbB

(56) Entgegenhaltungen:
- JP-A- 2014 193 069
- US-A- 4 618 794

## Beschreibung

Die vorliegende Erfindung betrifft einen zweipoligen bürstenkommutierten DC-Elektromotor mit einem Stator und einem, mit einer hohlzylindrischen, eisenlosen Wicklung mit n Teilspulen und mit einem Kollektor mit n Kollektorlamellen versehenen Rotor, wobei jede Teilspule mit zwei benachbarten Kollektorlamellen elektrisch verbunden ist, wobei eine senkrecht die Rotorachse schneidende und durch den Schwerpunkt einer Teilspule verlaufende Schwerpunktachse oder eine durch den Schwerpunkt verlaufende Mittellinie der Teilspule und die Rotorachse eine die Winkellage der zugehörigen Teilspule definierende Spulenebene aufspannen, zwei Bürstenkontaktflächen, der mit der gleichen Teilspule elektrisch verbundenen Kollektorlamellen voneinander einen Abstand mit einer senkrecht die Rotorachse schneidenden Abstandshalbierenden aufweisen, die Abstandshalbierende und die Rotorachse eine die Winkellage der zugehörigen Kollektorlamellen definierende Kollektorebene aufspannen, und wobei n eine ganze natürliche Zahl ist.

Insbesondere betrifft die vorliegende Erfindung einen Rotor nach dem Oberbegriff des unabhängigen Anspruchs 1 und einen DC-Elektromotor, der einen entsprechenden Rotor beinhaltet.

Ein solcher Gleichstromelektromotor ist z.B. aus der DE 102010049524 A1 bekannt. Es handelt sich um einen Motor mit einem Rotorsystem mit hohlzylindrischer eisenloser Wicklung, bei welchem die einzelnen Teilspulen schräg zur axialen Richtung des Hohlzylinders verlaufen und mit den zugehörigen Kollektorlamellen für eine Kommutierung verbunden sind. Hierzu werden die Wicklungsabzapfungen, die an der vorderen Stirnseite der Wicklung austreten, radial umgebogen und sternförmig nach innen geführt, wo sie dann mit der zugehörigen Kollektorlamelle elektrisch verbunden sind. Der von den mehreren, elektrisch voneinander isolierten Kollektorlamellen gebildete zylinderförmige Kollektor steht mit zwei diametral gegenüber liegend angeordneten Bürsten in Schleifkontakt. Die Bürsten weisen eine Federvorrichtung auf, mit der sie gegen den Kollektor gedrückt werden, so dass sich eine senkrecht auf die Mantelfläche wirkende Bürstenandruckkraft ergibt. Bei DC-Motoren wird während der Kommutierung der Strom einer Teilspule durch Kurzschließen derselben über die Bürste zunächst zum erliegen gebracht und anschließend mit umgekehrten Vorzeichen wieder aufgebaut. Üblicherweise werden bei solchen zweipoligen DC-Motoren gesehnte oder geschrägte Wicklungen verwendet. Beispiele für einsetzbare eisenlose Wicklungen, welche einen zur axialen Richtung schräg verlaufenden Wicklungsdrahtverlauf aufweisen, sind in der DE 1188709 B, DE 1463855 A1, DE 1538843 A1, DE 1613168 A1, DE 102005051059 A1, EP 2180581 A2, EP 1073179 A2, und der DE 102014102204 A1 beschrieben. Daraus ist ersichtlich, dass eine Polygon- bzw. Rautenform der Teilspulen bevorzugt wird. Jede Teilspule besteht aus einer gewissen Anzahl an Wicklungen und stellt demnach ein gebogenes, dreidimensionales Gebilde dar, welches sich um die Rotorachse dreht. In den überwiegenden Fällen für eisenlose Wicklungen, befinden sich die Wicklungsabzapfungen, welche mit den Kollektorlamellen verbunden werden, radial außerhalb der zugehörigen Kollektorlamelle. Durch einen relativ kurzen Leiter können diese dann miteinander elektrisch verbunden werden. Aus Platzgründen kann es bei besonderes kleinen Sonderformen auch vorteilhaft sein, diese schräg in einem Winkel von 45° zu verbinden. Eine solche Ausführungsform ist in der JP 2002-64966 A beschrieben.

Aus der EP 2104205 A1 ist ein kleiner Elektromotor mit einem, ein Blechpaket aufweisenden Rotor bekannt, bei dem mittels einer Verdrehung der Bürstenebene relativ zur Magnetebene ein schwingungsreduziertes Fahren gegen einen Anschlag erzielt werden soll. Um die Verdrehung der Bürsten relativ zu den Magneten auszugleichen, wird auch der Kommutator relativ zu den Wicklungen entsprechend zurück gedreht.

Der Stator eines zweipoligen bürstenkommutierten DC-Elektromotors kann einen zylindrischen Permanentmagneten aufweisen, der in das Innere der hohlzylindrischen eisenlosen Wicklung eingeschoben ist. Außen befindet sich dann eine magnetisch leitende Rückschlusshülse.

Derartige Elektromotoren weisen aufgrund des eisenlosen Rotors kein Rastmoment auf, so dass ein ruckfreier Lauf auch bei kleinen Drehzahlen möglich ist, was generell zu weniger Vibration und Geräuschen führt. Hierdurch kann jede beliebige Rotorposition einfach geregelt werden und es liegt keine Nichtlinearität im Regelverhalten vor. Aufgrund des fehlenden Eisens im Rotor ergeben sich demnach keine Eisenverluste und es findet eine konstant eingeprägte Magnetisierung statt. Dies führt zu einem hohen Wirkungsgrad (bis über 90 %) und einem tiefen Leerlaufstrom (typisch < 50 mA). Es werden demnach Sättigungseffekte in einem Eisenkern vermieden. Darüber hinaus bleibt das erzeugte Drehmoment selbst bei den größten Strömen streng proportional zum Motorstrom. Die Stärke der Motoren hängt von der Stärke des verwendeten Permanentmagneten ab. Von Vorteil ist auch die kleine Massenträgheit des Rotors, was zu einer hohen Dynamik und kleinen Hochlaufzeiten führt. Obwohl diese Motoren weit verbreitet im Einsatz sind und in aller Regel ein gutes Betriebsverhalten aufweisen, hat sich in der Praxis gezeigt, dass es zuweilen zu Schwingungen im Bereich des Kollektors kommt, wodurch der Strom moduliert wird, was in der Folge zu einer Verstärkung der Schwingungen durch diese Rückkopplung führt.

Ein Rotor nach dem Oberbegriff des unabhängigen Anspruchs 1 wird in JP 2014193069 A beschrieben. Ferner beschreibt US 4 618 794 A einen bürstenkommutierten DC-Elektromotor.
Es ist daher die Aufgabe der vorliegenden Erfindung, einen Rotor und einen zweipoligen bürstenkommutierten DC-Elektromotor der eingangs genannten Art bereitzustellen, der einen entsprechenden Rotor beinhaltet und eine reduzierte Strommodulation durch ein verbessertes Schwingungsverhalten aufweist.

Die Aufgabe wird mit einem Rotor entsprechend den Merkmalen des unabhängigen Anspruchs 1 und einem DC-Elektromotor, der einen Rotor entsprechend den Merkmalen des unabhängigen Anspruchs 1 beinhaltet, gelöst. Hierzu ist bei einem gattungsgemäßen Rotor nach dem Oberbegriff des Anspruchs 1 vorgesehen, dass die Spulenebene einer Teilspule um einen Korrekturwinkel (α) im Winkelbereich von > 45° bis < 135° um die Rotorachse zur Kollektorebene der zugehörigen Kollektorlamellen verdreht angeordnet ist.

Weiterhin ist ein zweipoliger bürstenkommutierter DC-Elektromotor, der einen erfindugsgemäßen Rotor beinhaltet, vorgesehen. Die Erfinder haben erkannt, dass insbesondere bei Teilspulen, die schräg zur axialen Richtung des Hohlzylinders verlaufen, mit dem Strom eine diametral resultierende Kraft oder ein quer zur Drehachse verlaufendes Drehmoment (je nach Wicklungsart) verbunden ist. Beide Effekte können den Rotor an der Stelle des Kollektors in radialer Richtung auslenken. Wenn diese seitliche Bewegung des Kollektors eine Komponente in Richtung der Bürsten aufweist, werden der Bürstenandruck und damit der Strom moduliert. Mit der Erfindung wird deshalb versucht, diesen Krafteinfluss bzw. Momenteneinfluss in vorteilhafter Weise zu verringern bzw. zu unterdrücken. Am günstigsten wäre es natürlich, wenn die Richtung der Kräfte und Momente, die durch Ströme im kommutierten Wicklungssegment (d.h. der Teilspule) auftreten, im Wesentlichen senkrecht zur Richtung des Bürstenandrucks wirken, so dass die Rückkopplung über den Bürstenandruck vermieden wird. Ein Vorteil stellt sich aber bereits schon dann ein, wenn die Rückkopplung über den Bürstenandruck im Verhältnis zu bekannten Ausführungsformen reduziert wird. Durch den Korrekturwinkel zwischen der Spulenebene und der Kollektorebene kann die Richtung der wirkenden Kraft verändert werden, so dass der Einfluss auf die Bürsten in Richtung des Bürstenandrucks reduziert wird bzw. unterdrückt wird. Nachdem die Wicklung bzw. die einzelnen Teilspulen in ihrer Formenvielfalt und ihrer dreidimensionalen Anordnung schwer zu beschreiben sind, wird im vorliegenden Fall auf den Schwerpunkt einer Teilspule abgestellt. In den meisten Fällen wird auch die resultierende Kraft dieser Teilspule auf diesen Schwerpunkt zu beziehen sein bzw. das resultierende Moment um diesen wirken. Die Schwerpunktachse, die senkrecht auf der Rotorachse steht, spannt dann zusammen mit der Rotorachse in aller Regel eine Spulenebene auf, die in den meisten Fällen die Teilspule in zwei symmetrische Hälften unterteilt. Für jede der Teilspulen lässt sich so eine Spulenebene ermitteln, die dann jeweils um einen bestimmten Winkelbetrag zu der Spulenebene der benachbarten Teilspule um die Rotorachse verdreht angeordnet ist.

In gleicher Weise sind die Drehwinkellagen der Kollektorlamellen durch die Kollektorebene definiert. Jeweils zwei benachbarte Kollektorlamellen definieren eine dazwischen aufgespannte Kollektorebene. Diese Kollektorebene teilt in aller Regel auch die Kontaktfläche der zugeordneten Bürste in zwei Hälften, wenn die Bürste sich im symmetrischen Kontakt mit den Bürstenkontaktflächen der beiden benachbarten Kollektorlamellen befindet. Die Wicklung wird quasi gegenüber herkömmlichen Ausgestaltungen gegenüber dem Kollektor um einen vorgegebenen Korrekturwinkel verdreht angeordnet. Die Bürsten folgen entsprechend dieser Verdrehung.

Es hat sich gezeigt, dass die Erfindung insbesondere bei der Verwendung mit einer Wicklung gemäß der DE 1538843 A1, DE 1463855 A1, DE 102005051059 A1, EP 2180581 A2 und DE 102014102204 A1 von besonderem Vorteil ist, da sie zu einer Reduktion der Schwingung des Rotorsystems führt.

Die Vorteile der vorliegenden Erfindung machen sich bereits dann schon sehr gut bemerkbar, wenn gemäß einer Ausführungsform der Korrekturwinkel in einem Winkelbereich von 60° bis 120°, bevorzugt 75° bis 105°, liegt. Von besonderem Vorteil ist natürlich eine Ausführungsform, bei der der Korrekturwinkel im Wesentlichen 90° beträgt. Hierdurch wirken bei den meisten Wicklungsarten die resultierenden Kräfte im Wesentlichen tangential zum Kollektor und damit senkrecht zum Bürstenandruck, wodurch die Verschiebung des Kommutators in Richtung der Brüste minimiert ist.

Obwohl die vorliegende Erfindung auf die unterschiedlichsten Rotorausgestaltungen Anwendung finden kann, ist sie von besonderem Vorteil bei einem Rotor, der eine hohlzylindrische eisenlose Wicklung aufweist. Diese Rotoren weisen eine geringe rotierende Masse aufgrund des fehlenden Eisens auf. Allerdings können sie daher auch leichter durch Querkräfte radial ausgelenkt werden. Selbstverständlich hat bei dieser radialen Auslenkung auch die Ausgestaltung der Lager einen bestimmten Einfluss.

Querkräfte treten insbesondere dann auf, wenn gemäß einer Ausführungsform die einzelnen Teilspulen der Wicklung zumindest zum Großteil schräg zur Rotorachse verlaufen. Dies ist insbesondere bei polygon- und rautenförmigen Anordnungen von Teilspulen der Fall. Hier machen sich die Vorteile der Erfindung besonders bemerkbar. Deshalb weisen gemäß einer Variante die einzelnen Windungen der Teilspulen in der Abwicklung der Wicklung jeweils eine Rautenform auf, deren vordere und hintere Spitze (die abgerundet sein können) jeweils an den Stirnseiten der Wicklung liegen. Als Abwicklung ist hier die flache, d.h. bandförmige Anordnung der Wicklung gemeint, wobei die Länge dieser abgewickelten Wicklung dem Umfang der hohlzylindrischen eisenlosen Wicklung entspricht.

Bevorzugt können eine erste Windung der Teilspule und eine letzte Windung der Teilspule jeweils mit einer Wicklungsabzapfung versehen sein, die elektrisch mit der jeweils zugehörigen Kollektorlamelle verbunden ist. Unter erster Windung und letzter Windung sind hier die echten, an der Kommutierung beteiligten Windungen, und keine Scheinwindungen gemeint, so dass sich auf die wirksame Teilspule bezogen wird. Eine Teilspule wird somit elektrisch mit zwei benachbarten Kollektorlamellen verbunden, so dass eine diese beiden Kollektorlamellen überbrückende Bürste diese Teilspule kurzschließt.

Um möglichst kurze Verbindungswege zwischen den Teilspulen und den Kollektorlamellen zu schaffen, sind die Wicklungsabzapfungen bevorzugt an der Stirnseite der Wicklung angeordnet, die dem Kollektor am nächsten liegt.

Bei einer vorteilhaften Ausgestaltung ist vorgesehen, dass die Wicklungsabzapfung schräg aus der Wicklung herausgeführt ist, um den Korrekturwinkel zu überbrücken. Hierdurch werden trotz des Korrekturwinkels noch relativ kurze Verbindungswege eingehalten.

Des Weiteren kann vorgesehen sein, dass die Wicklungsabzapfung und die zugehörige Kollektorlamelle mittels eines Leiters verbunden sind, der aus dem Wicklungsdraht gebildet ist oder der ein Teil des Kollektors ist oder der von einer gedruckten Leiterplattenschaltung gebildet ist. Je nach Bauart des Motors und hinsichtlich der Kosten kann hier auf die günstigste Verbindungstechnik zurückgegriffen werden. Es besteht auch die Möglichkeit, hier weitere Schaltungen zwischenzufügen, die die Kommutierung nochmals verbessert (z.B. eine CLL-Scheibe).

Die Zweipoligkeit lässt sich insbesondere dann einfach erzeugen, wenn der Stator einen Permanentmagneten mit einer Hauptmagnetisierungsrichtung aufweist und der Kollektor zwei diametral angeordnete Kollektorbürsten aufweist, deren gemeinsame Achse im Wesentlichen entsprechend um den Korrekturwinkel, bevorzugt senkrecht, verdreht (um die Rotorachse A) zur Hauptmagnetisierungsrichtung ausgerichtet ist. Diese Anordnung berücksichtigt schon den Korrekturwinkel der Wicklung, wodurch diese Anordnung bereits ungewöhnlich ist und die entsprechenden Vorteile mit sich bringt. Vorteile ergeben sich aber bereits dann, wenn eine Verdrehung der gemeinsamen Achse der Kollektorbürsten relativ zur Hauptmagnetisierungsrichtung um einen eigenen Korrekturwinkel im Winkelbereich von > 45° bis < 135°, bevorzugt von 60° bis 120°, weiter bevorzugt von 75° bis 105°, um die Rotorachse erfolgt.

Günstigerweise können gemäß einer Ausführungsform die Kollektorbürsten mittels einer Federvorrichtung an den Kollektor angedrückt sein. Hierdurch lässt sich eine im Wesentlichen gleichmäßige Andrückkraft auf einfache konstruktive Weise erzielen, so dass mit einer dosierten Andrückung zu rechnen ist, die die Reibung zwischen den beteiligten Elementen in vertretbaren Grenzen hält. Auch ein Verschleiß der Kollektorbürsten wird automatisch durch deren Nachführung ausgeglichen.

Bevorzugt können hier Graphitbürsten oder Edelmetallbürsten verwendet werden. Graphitbürsten, die zumeist einen Kupferanteil aufweisen, sind entweder radial verschieblich gelagert oder schwenkbar angeordnet und weisen eine Art Haken- bzw. Winkelform auf. Edelmetallbürsten sind in aller Regel Blattfedern aus Kupfer mit einer Silberbeschichtung im Kontaktbereich. Bevorzugt formen die Kollektorlamellen einen zylindrischen Kollektor aus, wobei die Kollektorbürsten diametral auf die zylindrische Mantelfläche des Kollektors aufdrücken. Diese Art des Kollektors hat sich bewährt und ermöglicht in Abhängigkeit der Anzahl der Kollektorlamellen relativ kleine Kollektordurchmesser, wodurch auch die Relativgeschwindigkeit zwischen den Reibungspartnern gering gehalten werden kann.

Des Weiteren bezieht sich die Erfindung auf einen Rotor für einen zweipoligen bürstenkommutierten DC-Elektromotor nach einem der Ansprüche 1 bis 14. Der Rotor weist eine hohlzylindrische, eisenlose Wicklung mit n Teilspulen und einen Kollektor mit n Kollektorlamellen auf, wobei jede Teilspule mit zwei benachbarten Kollektorlamellen elektrisch verbunden ist, wobei eine senkrecht, die Rotorachse schneidende und durch den Schwerpunkt einer Teilspule verlaufende Schwerpunktachse oder eine durch den Schwerpunkt verlaufende Mittellinie der Teilspule und die Rotorachse eine Winkellage der zugehörigen Teilspule definierende Spulenebene aufspannen, zwei Bürstenkontaktflächen der mit dieser Teilspule elektrisch verbundenen Kollektorlamellen voneinander einen Abstand mit einer senkrecht die Rotorachse schneidenden Abstandshalbierenden aufweisen, die Abstandshalbierende und die Rotorachse eine die Winkellage der zugehörigen Kollektorlamellen definierende Kollektorebene aufspannen, wobei n eine ganze natürliche Zahl ist, und wobei die Spulenebene eine um einen Korrekturwinkel (a) im Winkelbereich von > 45° bis < 135° um die Rotorachse zur Kollektorebene der zugehörigen Kollektorlamelle verdreht angeordnet ist. Ein solcher Rotor könnte auch als Austauschrotor in bestehende Motoren eingesetzt werden, sofern die Winkellage der Bürstenanordnung ebenfalls korrigiert werden kann.

Im Folgenden werden Ausführungsformen der vorliegenden Erfindung anhand von Zeichnungen näher erläutert. Es zeigen:
- Fig. 1: eine schematische Explosionsdarstellung eines konventionellen zweipoligen bürstenkommutierten DC-Elektromotors,
- Fig. 2: eine schematische Querschnittsdarstellung einer Kollektorseite eines konventionellen Rotors für einen zweipoligen bürstenkommutierten DC-Elektromotor,
- Fig. 3: eine schematische Darstellung einer Wicklungsvariante des Rotors,
- Fig. 4: eine schematische Darstellung einer weiteren Wicklungsvariante des Rotors,
- Fig. 5: eine schematische Darstellung einer abgewickelten Wicklung und des zugehörigen Kollektors mit Bürsten eines konventionellen zweipoligen bürstenkommutierten DC-Elektromotors,
- Fig. 6: eine schematische Darstellung einer abgewickelten Wicklung und des zugehörigen Kollektors mit Bürsten eines erfindungsgemäßen zweipoligen bürstenkommutierten DC-Elektromotors, und
- Fig. 7: eine schematische Vorderansicht auf die Kollektorseite einer Variante eines erfindungsgemäßen Rotors.

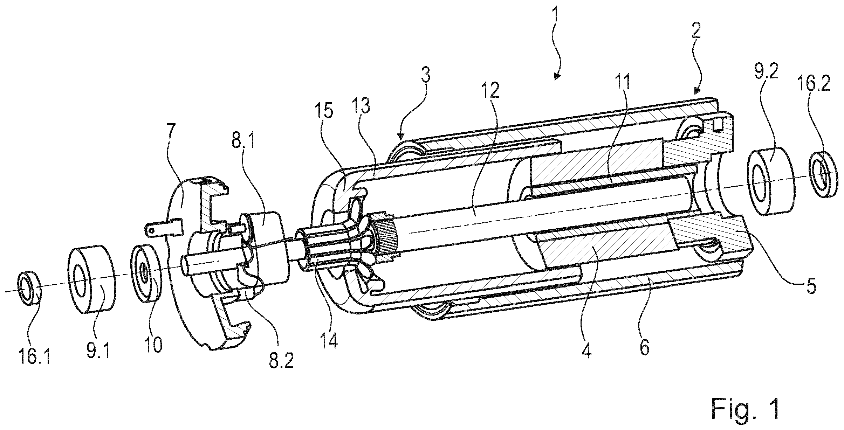

Anhand der Fig. 1 wird nunmehr der Aufbau eines konventionellen zweipoligen bürstenkommutierten DC-Elektromotors 1 näher erläutert. Die wesentlichen Bestandteile eines eisenlosen DC-Elektromotors 1 sind der Stator 2 und der Rotor 3. Zum Stator 2 gehören als wesentliche Bestandteile ein hohlzylindrischer Permanentmagnet 4, ein den Permanentmagnet 4 positionierender Flansch 5, ein aus Eisen bestehender, als Hülse ausgeformter magnetischer Rückschluss 6, und ein vorderer Flansch 7, an dem die beiden Kollektorbürsten 8.1 und 8.2 schwenkbar angebracht sind. Weitere Bestandteile des Stators 2 sind die in den Flanschen 5 und 7 angeordneten Kugellager 9.1 und 9.2 und die Dichtung 10.

Der Rotor 3 umfasst als wesentliche Bestandteile eine Welle 12, eine selbsttragende hohlzylindrische, eisenlose Wicklung 13, einen aus mehreren (im vorliegenden Fall 13) Kollektorlamellen 14.1-14.13 bestehenden Kollektor 14 und eine den Kollektor 14 und die Wicklung 13 mit der Welle 12 verbindende Kollektorplatte 15. Als weitere Bestandteile gehören noch zum Rotor 3 die als Sicherung dienenden und auf die äußeren Enden der Welle 12 aufgepressten Pressringe 16.1 und 16.2. Die Positionierung des Permanentmagneten 4 zum Flansch 5 erfolgt mittels einer in diese beiden Elemente eingepressten Hülse 11. Aus der Fig. 1 ist auch zu erkennen, dass die Kollektorlamellen 14.1-14.13 L-förmig gebogen sind, im vorderen Bereich gemeinsam den zylindrischen Kollektor 14 bilden, während die anderen L-Schenkel radial nach außen abstehen und mit den einzelnen Teilspulen (13 Teilspulen) elektrisch verbunden sind. Des Weiteren ist zu erkennen, dass im zusammengebauten Zustand die selbsttragende Wicklung 13 sich im Luftspalt zwischen der Mantelfläche des Permanentmagneten 4 und der Innenfläche des Rückschlusses 6 dreht.

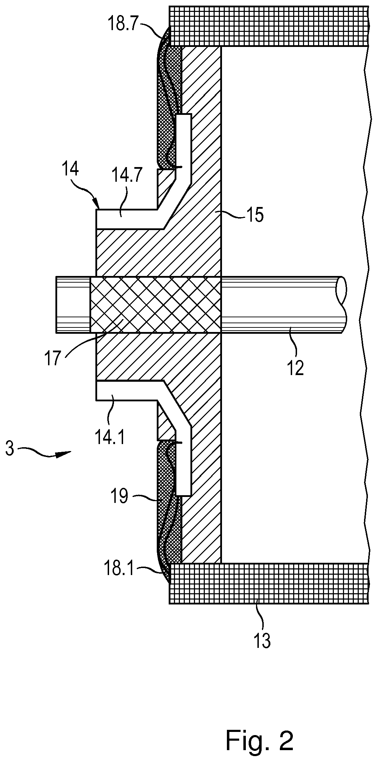

Anhand der Fig. 2 wird exemplarisch ein alternativer Aufbau des Kollektorendes des Rotors 3 gezeigt.

Die Kollektorplatte 15 ist durch Spritzgießen hergestellt und vereint die einzelnen Kollektorlamellen 14.1-14.13, so dass jeweils eine isolierende Schicht bzw. ein Abstand zwischen diesen vorhanden ist. Die Welle 12 ist zur besseren Anhaftung der Kollektorplatte 15 mit einer Rändelung 17 in diesem Bereich versehen. An den Stirnseiten der hohlzylindrischen Wicklung 13 treten die Wicklungsabzapfungen 18.1-18.13 hervor. Im vorliegenden Fall sind sie von einem Bestandteil des Wicklungsdrahtes gebildet, der an dieser Stelle heraustritt und radial nach innen weitergeführt und mit dem radialen Schenkel der zugehörigen Kollektorlamelle 14.1-14.13 verbunden ist. Zusätzlich ist noch eine Abdeckmasse 19 vorgesehen, die diese Verbindung schützt.

Bei der obigen Beschreibung handelt es sich um einen zweipoligen bürstenkommutierten DC-Elektromotor 1, bei dem die Wicklungsabzapfungen 18.1-18.13 radial direkt außerhalb der zugehörigen Schenkel der Kollektorlamellen 14.1-14.13 liegen. Die Ausrichtung der Kollektorbürsten 8.1 und 8.2 ist derart, dass sie den Kollektor 14 genau in Richtung der Hauptmagnetisierungsachse des Permanentmagneten 4 kontaktieren. Im vorliegenden Fall handelt es sich bei den Kollektorbürsten 8.1 und 8.2 um schwenkbar angeordnete, mittels Schenkelfedern angedrückte Graphitbürsten (mit Kupferanteil).

Als Wicklungsart kommen Wicklungen in Frage, wie sie in den Druckschriften DE 1538843 A1, DE 102005061059 A1, EP 2180581 A2 und DE 102014102204 A1 beschrieben sind. Selbstverständlich muss die erforderliche Anzahl der Teilspulen von 13 vorhanden sein.

Auf die Anzahl der Teilspulen und der Kollektorlamellen kommt es aber im vorliegenden Fall nicht an. In aller Regel wird jedoch eine ungerade Zahl, z.B. 5 oder 7, verwendet.

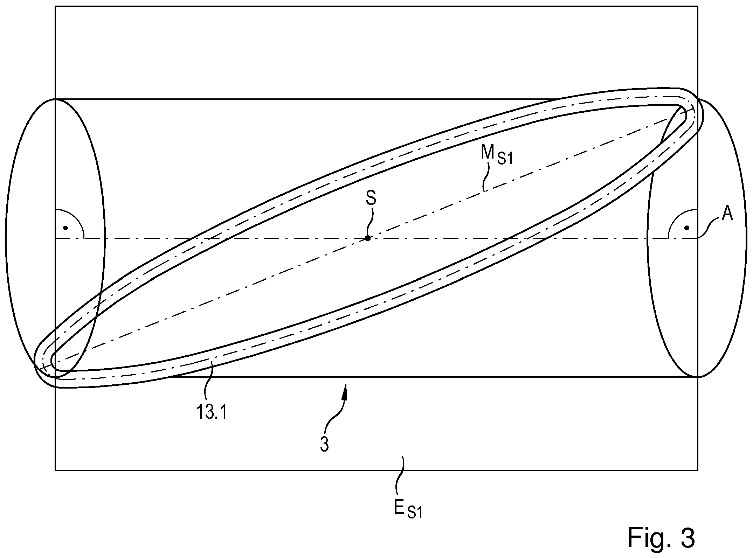

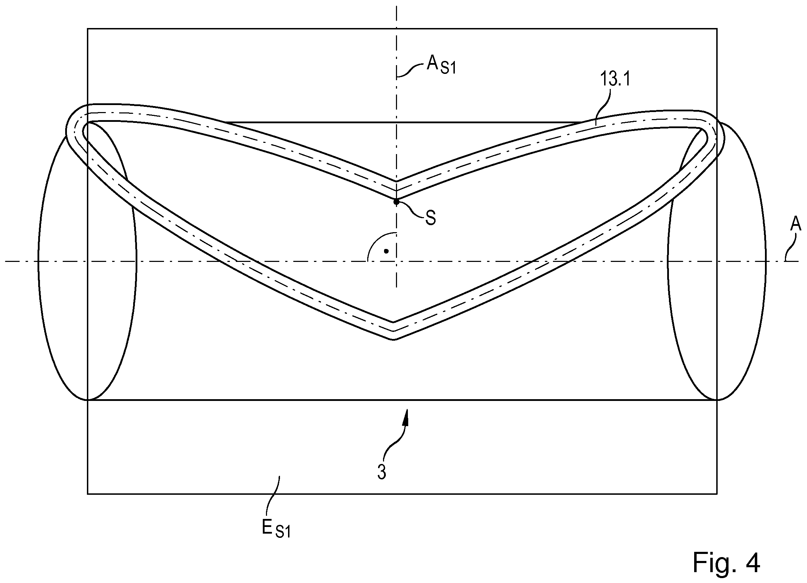

Anhand der Fig. 3 und 4 werden nunmehr exemplarisch verschiedene Positionierungen und Formen von Teilspulen gezeigt.

Fig. 3 zeigt eine Teilspule 13.1, die schräg um die gesamte hohlzylindrische Wicklung 13 verläuft. Die Teilspule 13.1 besteht aus mehreren Windungen und weist in der Draufsicht eine elliptische Form auf und erstreckt sich von einem zum anderen Stirnende der hülsenförmigen Wicklung 13. Die Teilspule 13.1 befindet sich daher bereichsweise oberhalb der Rotorachse A und teilweise unterhalb der Rotorachse A. Um die Winkellage dieser Teilspule 13.1 bestimmen zu können, wird deren Schwerpunkt S bestimmt. Bei diesem Sonderfall liegt der Schwerpunkt S genau auf der Rotorachse A, weshalb die Festlegung einer senkrecht auf der Rotorachse A stehenden Schwerpunktachse schwer fällt. In einem solchen Fall kann man sich damit behelfen, dass eine durch den Schwerpunkt verlaufende Mittellinie M_{S1} eingezeichnet wird, die die Teilspule 13.1 in zwei gleiche Hälften unterteilt bzw. die längste Ausdehnung der Teilspule 13.1 vorgibt. Diese Mittellinie M_{S1} spannt dann zusammen mit der Rotorachse A die Spulenebene E_{S1} auf. Die Spulenebene E_{S1} ist daher senkrecht auf der Rotorachse A angeordnet. Durch die Positionierung dieser Spulenebene E_{S1} lässt sich die Winkellage der Teilspule 13.1 am Rotor 3 genau definieren. Für alle anderen Teilspulen 13.2-13.7 wird dann jeweils genauso verfahren und die zugehörige Spulenebene E_{S2}-E_{S7} bestimmt.

Bei Wicklungstypen, wie sie in Fig. 4 dargestellt sind, verhält es sich etwas einfacher. Dort liegt der Schwerpunkt S nicht auf der Rotorachse A. Die Teilspule 13.1 weist in der Mitte einen Knick bzw. Umkehrpunkt auf, so dass sie im Wesentlichen einseitig zur Rotorachse A positioniert ist und zwei schräge Teilbereiche umfasst. Die Schwerpunktachse A_{S} verläuft genau durch den Schwerpunkt S und steht senkrecht auf der Rotorachse A. Die Schwerpunktachse A_{S1} und die Rotorachse A spannen nunmehr eine Spulenebene E_{S1} auf, die die Winkellage der Teilspule 13.1 am Rotor 3 vorgibt. Wenn z.B. die Teilspule 13.1 den Winkel von 0° definiert, dann verteilen sich die anderen Teilspulen 13.2-13.7 entsprechend in den vorgegebenen Winkelschritten auf die zur Verfügung stehenden 360°. Die in Fig. 4 dargestellte Wicklungsart ist eine der gängigsten. Für alle anderen Teilspulen 13.2-13.7 wird dann jeweils genauso verfahren und die zugehörige Spulenebene E_{S2}-E_{S7} bestimmt.

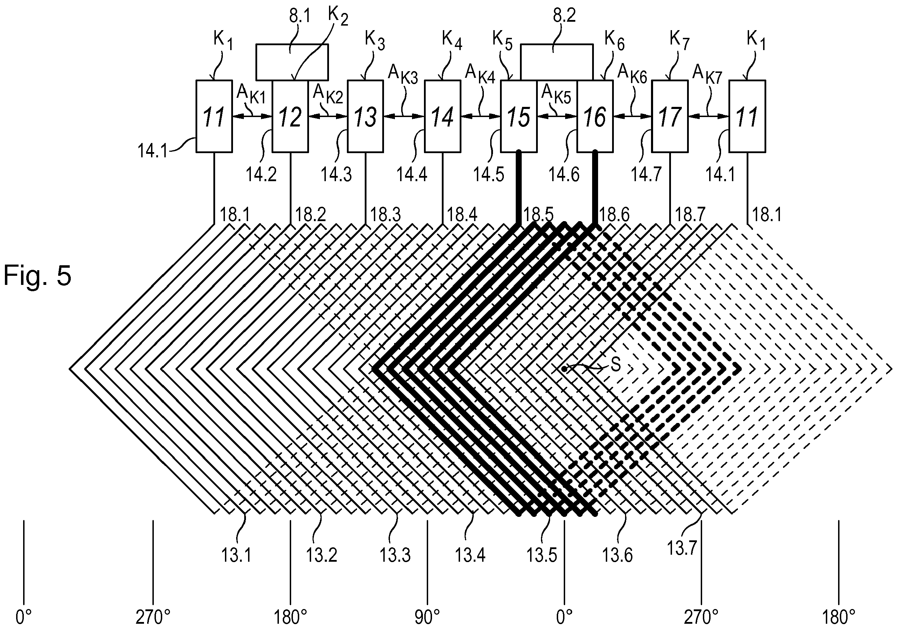

Anhand der Fig. 5 werden nunmehr die Anordnungsverhältnisse zwischen den sieben Teilspulen 13.1-13.7 bei einer Wicklungsform ähnlich der Fig. 4 und des zugehörigen Kollektors 14 mit sieben Kollektorlamellen 14.1-14.7 näher erläutert. Gezeigt ist schematisch die Abwicklung einer eisenlosen Wicklung 13 mit sieben Wicklungsabzapfungen 18.1 bis 18.7 und den sieben Teilspulen 13.1 bis 13.7. Exemplarisch wird anhand der Teilspule 13.5 (fett eingezeichnet) die Anordnung erläutert. In der schematischen Darstellung enthält die Teilspule 13.5 fünf Windungen. Jeweils an der ersten und an der letzten Windung befindet sich eine Wicklungsabzapfung 18.5 und 18.6, wobei die Wicklungsabzapfung 18.6 auch gleichzeitig die Wicklungsabzapfung der ersten Windung der Teilspule 13.6 darstellt. In ähnlicher Weise stellt die Wicklungsabzapfung 18.5 auch die Wicklungsabzapfung der letzten Windung der Teilspule 13.4 dar. Die Wicklungsabzapfung 18.5 ist elektrisch mit der Kollektorlamelle 14.5 verbunden. In gleicher Weise ist die Wicklungsabzapfung 18.6 mit der Kollektorlamelle 14.6 elektrisch verbunden. Die Winkelangabe in der Fig. 5 zeigt, dass die Teilspule 13.5 exakt zentral zum Winkel 0° angeordnet ist. Die Bürstenkontaktflächen K₅ und K₆ der Kollektorlamellen 14.5 und 14.6 weisen einen Abstand A_{K5} auf. Genau in der Mitte des Abstandes A_{K5} wird eine Abstandshalbierende H_{A5} gebildet (eine Gerade), die die Rotorachse A senkrecht schneidet (die Abstandshalbierende steht senkrecht auf der Zeichnungsebene der Fig. 5). Die Rotorachse A und die Abstandshalbierende H_{A5} spannen dann eine Ebene E_{K5} auf, die die Winkellage der beiden Kollektorlamellen 14.5 und 14.6 genau definiert. Diese Ebene E_{K5} erstreckt sich genau mittig zwischen den beiden Kollektorlamellen 14.5 und 14.6 hindurch, was im vorliegenden Fall bei exakt 0° liegt und somit dem gleichen Winkel entspricht, wie bei der Spulenebene E_{S5} der Teilspule 13.5. Hierdurch müssen von den Wicklungsabzapfungen 18.5 und 18.6 die Leitungen auch lediglich radial nach innen zu den zugehörigen Kollektorlamellen 14.5 und 14.6 geführt werden. Bei einer solchen Anordnung sind demnach die Spulenebenen E_{S1}-E_{S7} identisch zu den zugehörigen Kollektorlamellen E_{K1}-E_{K7}.

In Fig. 5 ist auch die zugehörige Lage der beiden Kollektorbürsten 8.1 und 8.2 dargestellt. Die Kollektorbürste 18.2 befindet sich exakt im symmetrischen Kontakt mit den beiden Kollektorlamellen 14.5 und 14.6, d.h. symmetrisch zu den zugehörigen Bürstenkontaktflächen K₅ und K₆ der Kollektorlamellen 14.5 und 14.6. Die Teilspule 13.5 zwischen den Kollektorlamellen 14.5 und 14.6 wird durch die Bürste 8.2 kurzgeschlossen. Die Ströme in dieser Teilspule 13.5 erzeugen eine Kraft, die genau in der Ebene der Bürsten 8.1 und 8.2 liegt. Die Bürste 8.1 ist hiervon auch betroffen, da sie genau diametral (bei einer 180°) gegenüberliegt. Diese Kraft wirkt also der Andrückung der Kollektorbürsten 8.1 und 8.2 entgegen und führt somit zu einer Modulierung des Stroms. Aufgrund dieser Rückkopplung kann es zu verstärkten Schwingungen kommen. Ergänzend sei angemerkt, dass in der Darstellung die Wicklungabzapfung 18.2 sowie die Kollektorlamelle 14.1 zweimal dargestellt sind. Diese fallen in der zylindrisch aufgerollten Form der Wicklung 13 aufeinander, d.h. es handelt sich in Wirklichkeit um dieselbe Wicklungsabzapfung 18.1 bzw. dieselbe Kollektorlamelle 14.1.

Das Erregerfeld des Stators 2 zeigt in die mit 0° bezeichnete Richtung. Das bedeutet, dass die Hauptmagnetisierungsrichtung (senkrecht zur Zeichnungsebene) des Permanentmagneten 4 entsprechend senkrecht auf der Rotorachse A steht. Die Kollektorbürsten 8.1 und 8.2 sind entsprechend in der von der Rotorachse A und der Hauptmagnetisierungsrichtung aufgespannten Ebene ausgerichtet.

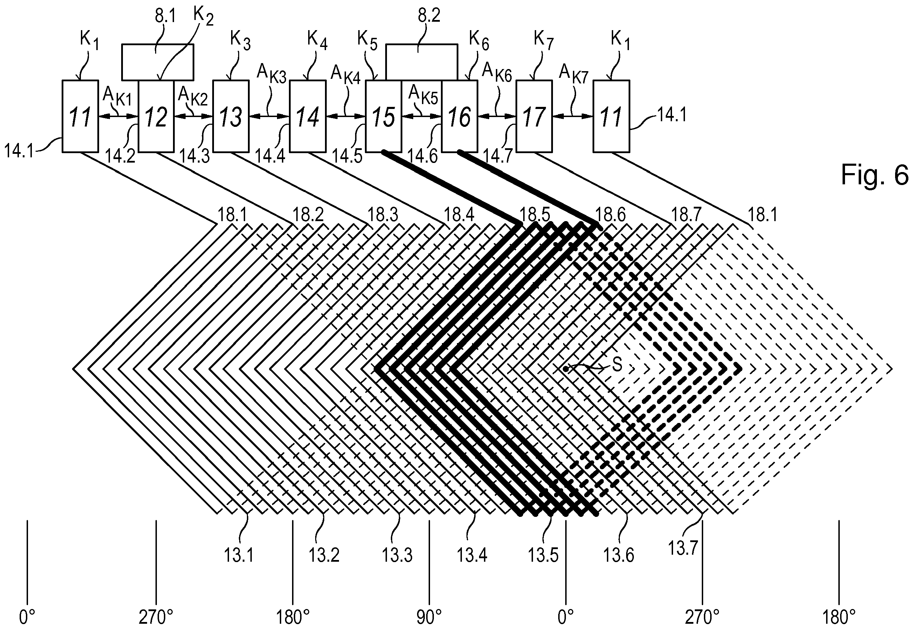

Bei der in Fig. 5 dargestellten Anordnung handelt es sich um eine der gängigsten Anordnungen im Bereich der zweipoligen, bürstenkommutierten DC-Elektromotoren. Hier soll die Erfindung Abhilfe schaffen, was nunmehr anhand der schematischen Fig. 6 erläutert wird. Sofern in der Folge auf gleiche und wirkungsgleiche Bauelemente Bezug genommen wird, wird unter Verwendung der gleichen Bezugsziffern auch ergänzend auf die vorangegangene Beschreibung verwiesen. Die Erfindung kann von den anhand der Fig. 1 bis 4 beschriebenen Prinzipien und Aufbauten bis auf die im Folgenden beschriebenen Unterschiede Gebrauch machen.

Die Teilspulen 13.1-13.7 sind wieder exakt in der gleichen Winkelstellung angeordnet. Auch das Erregerfeld des Stators 2 zeigt wieder in die mit 0° bezeichnete Richtung, d.h. die Hauptmagnetisierungsrichtung des Permanentmagneten 4 ist senkrecht zur Rotorachse A entsprechend ausgerichtet. Allerdings erfolgt nunmehr ein Drehwinkelversatz des Kollektors 14 und der Kollektorbürsten 8.1 und 8.2. Im dargestellten Ausführungsbeispiel beträgt der Korrekturwinkel α, um den die Verdrehung gegenüber der Wicklung 13 erfolgt, um 90° (liegt also im bevorzugten Bereich von > 45° und < 135°). Das bedeutet, die Kollektorbürste 8.2 befindet sich in diesem System auf 90° und die in diesem Moment kurzgeschlossene Teilspule 13.5 auf 0°. Die beiden zugehörigen Kollektorlamellen 14.5 und 14.6 sind entsprechend zu dem Drehwinkel von 90° zentriert ausgerichtet. Entsprechendes gilt auch für die Kollektorbürste 8.1, die sich nunmehr auf 270° in diesem System befindet. Durch die Verdrehung des gesamten Kollektors 14, einschließlich der zugehörigen Kollektorbürsten 8.1 und 8.2 um den Korrekturwinkel α, müssen auch ausgehend von den Wicklungsabzapfungen 18.1-18.7 dazwischen liegenden elektrischen Verbindungen diesen Winkel mit überbrücken. In der konkreten Ausgestaltung gibt er hierzu unterschiedliche Möglichkeiten. Die dazwischen liegenden Leiter können aus dem Wickeldraht bestehen, ein Teil des Kollektors selbst sein oder durch separate Elemente geformt werden, wie z.B. eine gedruckte Leiterplattenschaltung.

Die Verdrehung um den Korrekturwinkel führt dazu, dass eine von der kurzgeschlossenen Teilspule 13.5 ausgehende Kraft, die senkrecht zur Zeichnungsebene (Fig. 6) steht, nunmehr nicht in Andrückrichtung der Bürsten 8.1 und 8.2 wirkt, sondern senkrecht dazu und somit lediglich als Tangentialkraft bei der Kommutierung wahrgenommen wird. Der Einfluss auf den Bürstenkontakt durch eine eventuelle Auslenkung des Rotors 3 aufgrund dieser Kräfteverhältnisse wird hierdurch sehr stark reduziert, wodurch in der Folge auch Strommodulationen reduziert bzw. unterdrückt werden. In der in Fig. 6 gezeigten Anordnung sind die Spulenebenen E_{S1}-E_{S7} zu den Kollektorebenen E_{K1}-E_{K7} entsprechend jeweils um 90° um die Rotorachse A verdreht angeordnet.

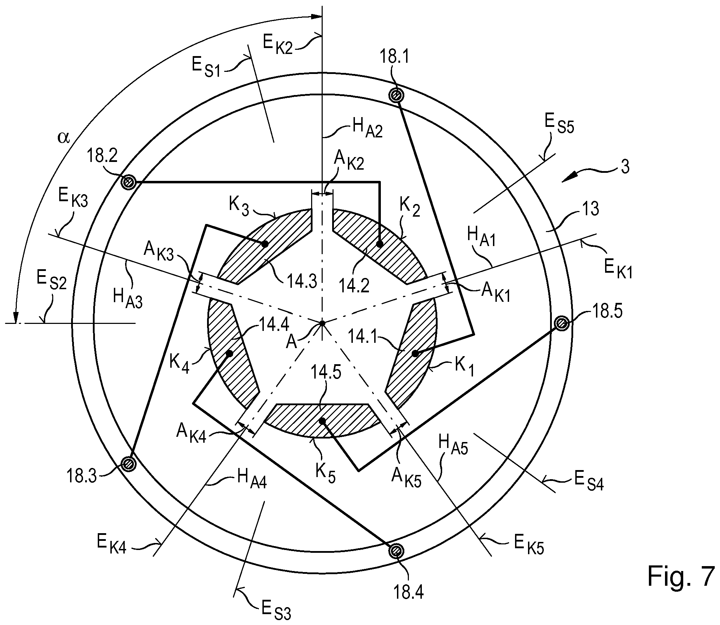

Anhand der Fig. 7 wird diese Verdrehung noch einmal anhand einer Vorderansicht auf den Rotor 3 näher erläutert. Das in Fig. 7 dargestellte Ausführungsbeispiel verfügt lediglich über fünf Teilspulen 13.1-13.5 und fünf Kollektorlamellen 14.1-14.5. Die Wicklungsabzapfungen 18.1-18.5 an der Stirnseite der Wicklungshülse 13 sind ebenfalls dargestellt. Zu erkennen ist, dass die Wicklungsdrähte schräg herausgeführt und dann mit der zugehörigen Kollektorlamelle 14.1-14.5 verbunden sind. Exemplarisch sei hier die Kollektorlamelle 14.2 genannt, die mit der Abzapfung 18.2 elektrisch in Kontakt steht. In der Zeichnung ist auch eingezeichnet, dass die Kollektorebene E_{K2} um einen Korrekturwinkel α von 90° zur Spulenebene E_{S2} verdreht angeordnet ist. Gleiches gilt für die anderen Kollektorebenen E_{K1}, E_{K3}-E_{K5} und jeweils zugehörigen Spulenebenen E_{S1}, E_{S2}-E_{S5}.

### Bezugszeichenliste

- 1: DC-Elektromotor
- 2: Stator
- 3: Rotor
- 4: Permanentmagnet
- 5: Flansch
- 6: Rückschluss
- 7: vorderer Flansch
- 8.1,8.2: Kollektorbürsten
- 9.1.9.2: Kugellager
- 10: Dichtung
- 11: Hülse
- 12: Welle
- 13: Wicklung
- 13.1-13.13: Teilspulen
- 14: Kollektor
- 14.1-14.13: Kollektorlamellen
- 15: Kollektorplatte
- 16.1,16.2: Pressringe
- 17: Rändelung
- 18.1-18.13: Wicklungsabzapfung
- 19: Abdeckmasse

- A: Rotorachse
- A_{K1}-A_{K7}: Abstand Kollektorlamellen
- E_{K1}-E_{K5}: Kollektorebene
- E_{S1}-E_{S7}: Spulenebene
- H_{A1}-H_{A7}: Abstandshalbierende
- K₁-K₇: Bürstenkontaktfläche
- M_{S1}-M_{S7}: Mittellinie Teilspule
- S: Schwerpunkt
- α: Korrekturwinkel

## Patentansprüche

1. Rotor (3) für einen zweipoligen bürstenkommutierten DC-Elektromotor (1), wobei der Rotor (3) eine hohlzylindrische, eisenlose Wicklung (13) mit n Teilspulen (13.1-13.7) und einen Kollektor (14) mit n Kollektorlamellen (14.1-14.7) aufweist, wobei jede Teilspule (13.1-13.7) mit zwei benachbarten Kollektorlamellen (14.1-14.7) elektrisch verbunden ist, wobei eine senkrecht die Rotorachse (A) schneidende und durch den Schwerpunkt (S) einer Teilspule (13.1-13.7) verlaufende Schwerpunktachse (A_{S1}-A_{S7}) oder eine durch den Schwerpunkt (S) verlaufende Mittellinie (M_{S1}-M_{S7}) der Teilspule (13.1-13.7) und die Rotorachse (A) eine die Winkellage der zugehörigen Teilspule (13.1-13.7) definierende Spulenebene (E_{S1}-E_{S7}) aufspannen, zwei Bürstenkontaktflächen (K₁-K₇), der mit der gleichen Teilspule (13.1-13.7) elektrisch verbundenen Kollektorlamellen (14.1-14.7) voneinander einen Abstand (A_{K1}-A_{K7}) mit einer senkrecht die Rotorachse (A) schneidenden Abstandshalbierenden (H_{A1}-H_{A7}) aufweisen, die Abstandshalbierende (H_{A1}-H_{A7}) und die Rotorachse (A) eine die Winkellage der zugehörigen Kollektorlamellen (14.1-14.7) definierende Kollektorebene (E_{K1}-E_{K7}) aufspannen, und wobei n eine ganze natürliche Zahl ist, **dadurch gekennzeichnet, dass** die Spulenebene (E_{S1}-E_{S7}) einer Teilspule (13.1-13.7) um einen Korrekturwinkel (α) im Winkelbereich von > 45° bis < 135° um die Rotorachse (A) zur Kollektorebene (E_{K1}-E_{K7}) der zugehörigen Kollektorlamellen (13.1-13.7) verdreht angeordnet ist.

2. Zweipoliger bürstenkommutierter DC-Elektromotor (1), umfassend einen Stator (2) und einen Rotor (3) nach Anspruch 1.

3. Zweipoliger bürstenkommutierter DC-Elektromotor (1) nach Anspruch 2, **dadurch gekennzeichnet, dass** der Korrekturwinkel (α) in einem Winkelbereich von 60° bis 120°, bevorzugt 75° bis 105°, liegt.

4. Zweipoliger bürstenkommutierter DC-Elektromotor (1) nach Anspruch 2 oder 3, **dadurch gekennzeichnet, dass** der Korrekturwinkel (α) im Wesentlichen 90° beträgt.

5. Zweipoliger bürstenkommutierter DC-Elektromotor (1) nach einem der Ansprüche 2-4, **dadurch gekennzeichnet, dass** die einzelnen Teilspulen (13.1-13.7) der Wicklung (13) zumindest zum Großteil schräg zur Rotorachse (A) verlaufen.

6. Zweipoliger bürstenkommutierter DC-Elektromotor (1) nach einem der Ansprüche 2-5, **dadurch gekennzeichnet, dass** die einzelnen Windungen der Teilspulen (13.1-13.7) in der Abwicklung der Wicklung (13) jeweils eine Rautenform aufweisen, deren vordere und hintere Spitze jeweils an den Stirnseiten der Wicklung (13) liegen.

7. Zweipoliger bürstenkommutierter DC-Elektromotor (1) nach einem der Ansprüche 2-6, **dadurch gekennzeichnet, dass** eine erste Windung der Teilspule (13.1.-13.7) und eine letzte Windung der Teilspule (13.1-13.7) jeweils mit einer Wicklungsabzapfung (18.1-18.7) versehen sind, die elektrisch mit der jeweils zugehörigen Kollektorlamelle (14.1-14.7) verbunden ist.

8. Zweipoliger bürstenkommutierter DC-Elektromotor (1) nach Anspruch 7, **dadurch gekennzeichnet, dass** die Wicklungsabzapfungen (18.1-18.7) an der Stirnseite der Wicklung angeordnet sind, die dem Kollektor (14) am nächsten liegt.

9. Zweipoliger bürstenkommutierter DC-Elektromotor (1) nach einem der Ansprüche 2-8, **dadurch gekennzeichnet, dass** die Wicklungsabzapfungen (18.1-18.7) schräg aus der Wicklung (13) herausgeführt sind, um den Korrekturwinkel (α) zu überbrücken.

10. Zweipoliger bürstenkommutierter DC-Elektromotor (1) nach einem der Ansprüche 2-9, **dadurch gekennzeichnet, dass** die Wicklungsabzapfungen (18.1-18.7) und die zugehörige Kollektorlamellen (14.1-14.7) mittels eines Leiters verbunden sind, der aus dem Wicklungsdraht gebildet ist oder der ein Teil des Kollektors (14) ist oder der von einer bedruckten Leiterplattenschaltung gebildet ist.

11. Zweipoliger bürstenkommutierter DC-Elektromotor (1) nach einem der Ansprüche 2-10, **dadurch gekennzeichnet, dass** der Stator (2) einen Permanentmagneten (4) mit einer Hauptmagnetisierungsrichtung aufweist und der Kollektor (14) zwei diametral angeordnete Kollektorbürsten (8.1,8.2) aufweist, deren gemeinsame Achse im Wesentlichen entsprechend um den Korrekturwinkel (α) verdreht zur Hauptmagnetisierungsrichtung ausgerichtet ist.

12. Zweipoliger bürstenkommutierter DC-Elektromotor (1) nach einem der Ansprüche 2-11, **dadurch gekennzeichnet, dass** die Kollektorbürsten (8.1,8.2) mittels einer Federvorrichtung an den Kollektor (14) angedrückt sind.

13. Zweipoliger bürstenkommutierter DC-Elektromotor (1) nach einem der Ansprüche 2-12, **dadurch gekennzeichnet, dass** die Kollektorbürsten (8.1,8.2) Graphitbürsten oder Edelmetallbürsten sind.

14. Zweipoliger bürstenkommutierter DC-Elektromotor (1) nach einem der Ansprüche 2-13, **dadurch gekennzeichnet, dass** die Kollektorlamellen (14.1-14.7) einen zylindrischen Kollektor (14) ausformen und die Kollektorbürsten (8.1,8.2) diametral auf die zylindrische Mantelfläche des Kollektors (14) aufdrücken.

## Claims

1. Rotor (3) for a two-pole brush-commutated DC electric motor (1), wherein said rotor (3) comprises a hollow-cylindrical ironless winding (13) having n coil segments (13.1-13.7) and a commutator (14) having n commutator segments (14.1-14.7), each coil segment (13.1-13.7) being electrically connected to two adjacent commutator segments (14.1-14.7), an axis of gravity (A_{S1}-A_{S7}) that intersects said rotor axis (A) perpendicularly and passes through the center of gravity (S) of a coil segment (13.1-13.7) or a center line (M_{S1}-M_{S7}) of said coil segment (13.1-13.7) that passes through said center of gravity (S) and said rotor axis (A) spanning a coil plane (E_{S1}-E_{S7}) that defines the angular position of the associated coil segment (13.1-13.7), two brush contact surfaces (K₁-K₇) of said commutator segments (14.1-14.7) that are electrically connected to the same coil segment (13.1-13.7) have a distance (A_{K1}-A_{K7}) to each other with a distance bisector (H_{A1}-H_{A7}) intersecting said rotor axis (A) perpendicularly, said distance bisector (H_{A1}-H_{A7}) and said rotor axis (A) spanning a commutator plane (E_{K1}-E_{K7}) which defines the angular position of the associated commutator segments (14.1-14.7), and where n is a whole natural number, **characterized in that** said coil plane (E_{S1}-E_{S7}) of said coil segment (13.1-13.7) is arranged rotated by a correction angle (α) in the angular range of > 45° to < 135° about said rotor axis (A) relative to said commutator plane (E_{K1}-E_{K7}) of said associated commutator segments (14.1-14.7).

2. Two-pole brush-commutated DC electric motor (1) comprising a stator (2) and a rotor (3) according to claim 1.

3. Two-pole brush-commutated DC electric motor (1) according to claim 2, **characterized in that** said correction angle (α) is in an angular range of 60° to 120°, preferably of 75° to 105°.

4. Two-pole brush-commutated DC electric motor (1) according to claim 2 or 3, **characterized in that** said correction angle (α) is substantially 90°.

5. Two-pole brush-commutated DC electric motor (1) according to one of the claims 2-4, **characterized in that** said individual coil segments (13.1-13.7) of said winding (13) at least largely run oblique relative to said rotor axis (A).

6. Two-pole brush-commutated DC electric motor (1) according to one of the claims 2-5, **characterized in that** the individual turns of said coil segments (13.1-13.7) in the development of said winding (13) each have a rhombic shape, the front and rear tip of which are located on the face sides of said winding (13).

7. Two-pole brush-commutated DC electric motor (1) according to one of the claims 2-6, **characterized in that** a first turn of said coil segment (13.1.-13.7) and a last turn of said coil segment (13.1.-13.7) are each provided with a winding tap (18.1-18.7) which is electrically connected to the respectively associated commutator segment (14.1-14.7).

8. Two-pole brush-commutated DC electric motor (1) according to claim 7, **characterized in that** said winding taps (18.1-18.7) are disposed at the face side of that winding which is closest to said commutator (14).

9. Two-pole brush-commutated DC electric motor (1) according to one of the claims 2-8, **characterized in that** said winding taps (18.1-18.7) are led obliquely out from said winding (13) in order to bridge said correction angle (α).

10. Two-pole brush-commutated DC electric motor (1) according to one of the claims 2-9, **characterized in that** said winding taps (18.1-18.7) and said associated commutator segments (14.1-14.7) are connected by use of a conductor which is formed from the winding wire or which is part of said commutator (14) or which is formed by a PCB circuit.

11. Two-pole brush-commutated DC electric motor (1) according to one of the claims 2-10, **characterized in that** said stator (2) comprises a permanent magnet (4) with a main magnetization direction, and said commutator (14) comprises two diametrically arranged commutator brushes (8.1, 8.2), the common axis of which is oriented substantially rotated by said correction angle (α) relative to said main magnetization direction.

12. Two-pole brush-commutated DC electric motor (1) according to one of the claims 2-11, **characterized in that** said commutator brushes (8.1,8.2) are pressed against said commutator (14) by use of a spring device.

13. Two-pole brush-commutated DC electric motor (1) according to one of the claims 2-12, **characterized in that** said commutator brushes (8.1,8.2) are graphite brushes or noble metal brushes.

14. Two-pole brush-commutated DC electric motor (1) according to one of the claims 2-13, **characterized in that** said commutator segments (14.1-14.7) form a cylindrical commutator (14) and said commutator brushes (8.1,8.2) press diametrically onto the cylindrical jacket surface of said commutator (14).

## Revendications

1. Rotor (3) pour un moteur électrique (1) à courant continu, bipolaire, à commutation par balais, rotor (3)
dans lequel est prévu un bobinage (13) cylindrique creux, exempt de fer, avec n bobines partielles (13.1 - 13.7) et un collecteur (14) avec n lamelles de collecteur (14.1 - 14.7),
dans lequel chaque bobine partielle (13.1 - 13.7) est reliée électriquement à deux lamelles de collecteur (14.1 - 14.7) voisines,
dans lequel un axe de gravité (A_{S1} - A_{S7}) coupant perpendiculairement l'axe de rotor (A) et passant par le centre de gravité (S) d'une bobine partielle (13.1 - 13.7), ou bien une ligne médiane (M_{S1} - M_{S7}) passant par le centre de gravité (S) de la bobine partielle (13.1 - 13.7), et l'axe de rotor (A) déterminent un plan de bobine (E_{S1} - E_{S7}) définissant la position angulaire de la bobine partielle (13.1 - 13.7) associée, deux surfaces de contact de balai (K₁ - K₇) des lamelles de collecteur (14.1 - 14.7) reliées électriquement à la même bobine partielle (13.1 - 13.7), présentent une distance d'espacement réciproque (A_{K1} - A_{K7}) avec une bissectrice d'espacement (H_{A1} - H_{A7}) coupant perpendiculairement l'axe de rotor (A), et la bissectrice d'espacement (H_{A1} - H_{A7}) et l'axe de rotor (A) déterminent un plan de collecteur (E_{K1} - E_{K7}) définissant la position angulaire des lamelles de collecteur (14.1 - 14.7) associées,
et dans lequel n est un nombre naturel entier,
**caractérisé en ce que** le plan de bobine (E_{S1} - E_{S7}) d'une bobine partielle (13.1 - 13.7) est agencé de manière tournée d'un angle de correction (α), dans une plage angulaire de > 45° à < 135° autour de l'axe de rotor (A), par rapport au plan de collecteur (E_{K1} - E_{K7}) des lamelles de collecteur (14.1 - 14.7) associées.

2. Moteur électrique (1) à courant continu, bipolaire, à commutation par balais, comprenant un stator (2) et un rotor (3) selon la revendication 1.

3. Moteur électrique (1) à courant continu, bipolaire, à commutation par balais, selon la revendication 2, **caractérisé en ce que** l'angle de correction (α) se situe dans une plage angulaire de 60° à 120°, de préférence de 75° à 105°.

4. Moteur électrique (1) à courant continu, bipolaire, à commutation par balais, selon la revendication 2 ou la revendication 3, **caractérisé en ce que** l'angle de correction (α) vaut sensiblement 90°.

5. Moteur électrique (1) à courant continu, bipolaire, à commutation par balais, selon l'une des revendications 2 - 4, **caractérisé en ce que** les bobines partielles (13.1 - 13.7) individuelles du bobinage (13) s'étendent, au moins pour leur plus grande part, de manière inclinée par rapport à l'axe de rotor (A).

6. Moteur électrique (1) à courant continu, bipolaire, à commutation par balais, selon l'une des revendications 2 - 5, **caractérisé en ce que** les spires individuelles des bobines partielles (13.1 - 13.7) présentent, dans le développement du bobinage (13), respectivement une forme de losange, dont le sommet avant et le sommet arrière se situent respectivement sur les côtés frontaux du bobinage (13).

7. Moteur électrique (1) à courant continu, bipolaire, à commutation par balais, selon l'une des revendications 2 - 6, **caractérisé en ce qu'**une première spire de la bobine partielle (13.1 - 13.7) et une dernière spire de la bobine partielle (13.1 - 13.7) sont pourvues respectivement d'un piquage de bobinage (18.1 - 18.7), qui est relié électriquement à la lamelle de collecteur (14.1 - 14.7) respectivement associée.

8. Moteur électrique (1) à courant continu, bipolaire, à commutation par balais, selon la revendication 7, **caractérisé en ce que** les piquages de bobinage (18.1 - 18.7) sont agencés sur le côté frontal du bobinage, qui est le plus proche du collecteur (14).

9. Moteur électrique (1) à courant continu, bipolaire, à commutation par balais, selon l'une des revendications 2 - 8, **caractérisé en ce que** les piquages de bobinage (18.1 - 18.7) sortent de manière oblique du bobinage (13), pour compenser l'angle de correction (α).

10. Moteur électrique (1) à courant continu, bipolaire, à commutation par balais, selon l'une des revendications 2 - 9, **caractérisé en ce que** les piquages de bobinage (18.1 - 18.7) et les lamelles de collecteur (14.1 - 14.7) associées sont reliés au moyen d'un conducteur, qui est formé par le fil de bobinage, ou bien est une partie du collecteur (14), ou bien est formé par une plaque de circuit imprimé.

11. Moteur électrique (1) à courant continu, bipolaire, à commutation par balais, selon l'une des revendications 2 - 10, **caractérisé en ce que** le stator (2) comprend un aimant permanent (4) avec une direction de magnétisation principale, et le collecteur (14) présente deux balais de collecteur (8.1, 8.2) agencés diamétralement, dont l'axe commun est orienté sensiblement tourné de manière correspondante à l'angle de correction (a), par rapport à la direction de magnétisation principale.

12. Moteur électrique (1) à courant continu, bipolaire, à commutation par balais, selon l'une des revendications 2 - 11, **caractérisé en ce que** les balais de collecteur (8.1, 8.2) sont pressés contre le collecteur (14) au moyen d'un dispositif à ressort.

13. Moteur électrique (1) à courant continu, bipolaire, à commutation par balais, selon l'une des revendications 2 - 12, **caractérisé en ce que** les balais de collecteur (8.1, 8.2) sont des balais en graphite ou des balais en métal spécial surfin.

14. Moteur électrique (1) à courant continu, bipolaire, à commutation par balais, selon l'une des revendications 2 - 13, **caractérisé en ce que** les lamelles de collecteur (14.1 - 14.7) forment un collecteur (14) cylindrique, et les balais de collecteur (8.1, 8.2) appuient diamétralement sur la surface enveloppe cylindrique du collecteur (14).
